# EUROPÄISCHE PATENTSCHRIFT

(11) **EP 2 281 134 B1**
(45) Veröffentlichungstag und Bekanntmachung des Hinweises auf die Patenterteilung: **14.11.2012**
(21) Anmeldenummer: 09757148.3
(22) Anmeldetag: 17.04.2009
(51) Int. Cl.: F16L 23/10

(54) **KLEMMVERBINDER ZUM ZUSAMMENSPANNEN VON VERBINDUNGSSTUTZEN AN ROHRLEITUNGEN**
CLAMP CONNECTOR FOR CLAMPING TOGETHER CONNECTING PIECES ON PIPELINES
DISPOSITIF DE SERRAGE POUR FIXER PAR SERRAGE DES TUBULURES DE RACCORDEMENT À DES CONDUITES

(30) Priorität: 03.06.2008 DE 102008026563
(43) Veröffentlichungstag der Anmeldung: 09.02.2011
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2009/002826
(87) Internationale Veröffentlichungsnummer: WO 2009/146764

(56) Entgegenhaltungen:
- DE-A1- 4 210 383
- DE-A1- 19 757 969
- US-A1- 2005 258 648
- US-A1- 2006 197 344

## Beschreibung

Die Erfindung betrifft einen Klemmverbinder zum Zusammenspannen von Verbindungsstutzen an Rohrleitungen, mit zwei Spannringteilen, die am einen Ende über eine Gelenkanordnung verbunden und um diese zwischen gespreizten Stellungen und einander angenäherten Spannstellungen schwenkbar sind, und mit einer an dem der Gelenkanordnung entgegengesetzten Ende der Spannringteile befindlichen Spanneinrichtung mit einer Spannschraube, die aus einer Wirkposition, in der sie zur Erzeugung einer die Spannringteile in die Spannstellungen drängenden Klemmkraft mit diesen zusammenwirkt, und einer davon abgeklappten Freigabeposition schwenkbar ist, wobei die Spanneinrichtung eine Sperreinrichtung aufweist, die in ihrem Wirkzustand das Abklappen der Spannschraube in die Freigabeposition verhindert und in Abhängigkeit vom Spreizen der Spannringteile um einen vorgegebenen Öffnungswinkel aus dem Wirkzustand in einen das Abklappen der Spannschraube ermöglichenden Freigabezustand übergeht, wobei die mit ihrem einen Ende mit dem ersten Spannringteil über ein Abklappgelenk schwenkbar verbundene Spannschraube einen endseitigen Gewindeabschnitt und einen demgegenüber im Durchmesser vergrößerten, dem Abklappgelenk benachbarten Bund aufweist, und wobei das zweite Spannringteil einen Durchgang aufweist, der von der in der Wirkposition befindlichen Spannschraube durchgriffen ist und einen das Abklappen derselben ermöglichenden Austrittsschlitz für die Spannschraube aufweist, dessen Weite zumindest in dem dem ersten Spannringteil benachbarten Schlitzbereich geringer ist als der Durchmesser des Bundes und größer als der Durchmesser des Gewindeabschnittes der Spannschraube ist. Ein derartiger Klemmverbinder ist aus US 2006/0197344 A1 bekannt.

Entsprechend DIN 32676 (^{©} DIN Deutsches Institut für Normung e. V.) sind Klemmverbindungen mit derartigen Klemmverbindern für Armaturen für Lebensmittel, Chemie und Pharmazie genormt, und zwar für einen verhältnismäßig großen Bereich von Nennweiten. Bei derartigen Klemmverbindern wirken die Spannringteile mit Klemmstutzen, die beispielsweise als Anschweißstutzen mit betreffenden Rohrenden verbindbar sind, in der Weise zusammen, dass die Axialkraft zum Zusammenspannen der Stutzen über an diesen über zur Rohrlängsachse geneigten Schrägflächen durch auf sie einwirkende radiale Klemmkraft erzeugt wird. Da derartige Klemmverbinder entsprechend den geltenden Normvorschriften auch bei größeren Nennweiten bis zu Drücken von 16 bar benutzbar sind, sind an die Betriebssicherheit besondere Anforderungen zu stellen.

DE 42 10 383 A1 offenbart einen klammerartigen Schnellverschluss zum Verbinden von im Betrieb unter Druck stehenden Fluid führenden Elementen, bestehend aus zwei im Wesentlichen halbkreisförmigen Backensegmenten, welche an ihrem einen Ende gelenkig miteinander verbunden sind und an deren freien Enden Schließmittel vorhanden sind, mit welchen der Schnellverschluss an den Druckfluid führenden Elementen festlegbar und von diesen freigebbar ist. Eine der Backensegmente weist an seinem freien Ende einen Ansatz mit einer im Wesentlichen U-förmigen Aussparung zur Aufnahme und Führung eines zylindrischen Gewindeabschnitts einer Spindelmutter auf, wobei an dem anderen Backensegment ein Ansatz zur Schwenklagerung eines Gewindeabschnitts der Spindelmutter vorgesehen ist, und wobei an die Spindelmutter eine Bundscheibe angeformt ist, welche mit einer Führung zusammenwirkend die Spindelmutter über einen vorbestimmten Schließ-Öffnungsweg gegen ein Schwenken um den Schwenkzapfen hindert.

Aus US 2005/0258648 A1 ist eine weitere Verbindungsanordnung zum Zusammenspannen von Verbindungsstutzen an Rohrleitungen bekannt, welche eine zwischen den Stutzen angeordnete, komprimierbare Dichtung und einen Verbinder zum Zusammenspannen der Verbindungsstutzen der Rohrleitungen umfasst. Der Verbinder weist erste und zweite, gelenkartig miteinander verbundene Spannringteile auf, welche über eine Schraubverbindung derart miteinander verbunden werden, dass die Dichtung komprimiert ist. Das Verbinder-Design verhindert eine zu große Kompression der Dichtung.

DE 197 57 969 A1 offenbart eine Verbindungsanordnung mit einem zwei Flansche übergreifenden Spannring, mindestens einer in einen Schlitz eines Verschlussstücks einschwenkbaren Verschlussschraube, die einen Bolzen mit einem Gewinde aufweist, auf dem eine gegen das Verschlussstück andrückbare Gewindemutter gelagert ist, und mit einem Anschlag, der das Verschwenken der Verschlussschraube in einer Verschlussposition der Gewindemutter durch Übergreifen eines Sperrteils blockiert und in einer Öffnungsposition der Gewindemutter freigibt. Hierbei ist der Anschlag an dem Verschlussstück angeordnet, der Sperrteil ist an einem von dem freien Ende der Verschlusschraube entfernt liegenden Teil des Bolzens angeordnet und an einem dem freien Ende näherliegenden Teil des Bolzens ist ein den Anschlag passierbarer Freigabeteil vorgesehen.

Im Hinblick hierauf stellt sich die Erfindung die Aufgabe, einen Klemmverbinder der betrachteten Art zur Verfügung zu stellen, der bei der Handhabung, insbesondere wenn es sich um ein erhöhtes Druckniveau handelt, ein besonders hohes Maß an Betriebssicherheit bietet.

Erfindungsgemäß ist diese Aufgabe durch einen Klemmverbinder gelöst, der die Merkmale des Patentanspruchs 1 in seiner Gesamtheit aufweist.

Danach besteht eine wesentliche Besonderheit der Erfindung darin, dass am zweiten Spannringteil Flächenteile vorhanden sind, die zugeordnete Flächenteile einer auf dem Gewindeabschnitt der Spannschraube befindlichen Spannmutter bei der Wirkposition derart übergreifen, dass ein Lösen der Spannmutter ein Spreizen der Spannringteile bewirkt.

Ein besonders hohes Maß an Betriebssicherheit ist gewährleistet, da bei einer erfindungsgemäßen Anordnung beim Lösen der Spannmutter die Spannringteile zwangsläufig gespreizt werden. Dadurch ist die Gefahr vermieden, dass in Fällen, in denen gegebenenfalls beim Lösen der Spannmutter die Spannringteile in der Spannstellung verkeilt sind und der Bewegung der Spannmutter nicht unmittelbar folgen, eine plötzliche Spreizbewegung unter Druck erfolgt. Durch die zwangsweise durch Lösen der Spannmutter bewirkte Spreizbewegung ist sichergestellt, dass ein gesteuertes Spreizen und dadurch ein gesteuerter Druckabbau stattfindet, bevor das Abklappen der Spannschraube erfolgt.

Dadurch, dass die Spanneinrichtung mit einer Sperreinrichtung versehen ist, die als Sicherheitseinrichtung fungiert, die ein Abklappen der Spannschraube nur ermöglicht, wenn bei einem Arbeitsgang, bei dem die Klemmverbindung getrennt wird, die Spannringteile aus der Spannstellung heraus zunächst um einen vorgegebenen Öffnungswinkel gespreizt sind. Dadurch ist die Gefahr vermieden, dass bereits ein geringfügiges Lösen der wirksamen Verschraubung an der Spannschraube zu einem Abklappen derselben aus der Wirkposition führen kann, wodurch ein plötzliches Lösen der Verbindung unter Druck mit entsprechender Gefährdung eintreten könnte.

Das Funktionsprinzip der Sperreinrichtung besteht demgemäß einfach darin, dass die Spannschraube für ihre Abklappbewegung erst dann aus dem Austrittsschlitz austreten kann, wenn ein Öffnungswinkel erreicht ist, bei dem der erweiterte Bund der Spannschraube den Austrittsschlitz verlassen hat, wonach der im Durchmesser kleinere Gewindeabschnitt aus dem Ausgangsschlitz ausklappbar ist. Eine solche Ausführungsform der Sperreinrichtung zeichnet sich durch eine besonders einfache Bauweise aus.

Bei vorteilhaften Ausführungsbeispielen weist die Spannmutter einen bei der Wirkposition der Spannschraube im Durchgang des zweiten Spannringteiles aufgenommenen Längenabschnitt auf, an dem sich die bei Lösen der Mutter die Spreizkraft erzeugende Fläche sowie die Fläche befinden, über die bei Festziehen der Mutter auf Stufenflächen des Durchgangs die Klemmkraft übertragen wird.

Dabei kann die Anordnung so getroffen sein, dass die Mutter in dem im Durchgang aufnehmbaren Bereich einen runden Schaftteil und einen radial von diesem flanschartig vorspringenden Ringkörper besitzt, dessen eine Flanschfläche das Ende des Schaftteiles und die die Klemmkraft übertragende Fläche und dessen andere Fläche die die Spreizkraft übertragende Fläche bilden.

Bei so gestalteter Form der Spannmutter kann der Durchgang und dessen Austrittsschlitz im zweiten Spannringteil derart gestuft sein, dass der Ringkörper durch einen erweiterten Abschnitt des Austrittsschlitzes in den Durchgang und aus diesem bewegbar ist, wobei am Ende des erweiterten Abschnittes die sich in den Durchgang erstreckenden Stufenflächen gebildet sind, die die Klemmkraft der anliegenden Flanschfläche des Ringkörpers der Mutter übertragen.

Um die bei Lösen der Mutter auf das zweite Spannringteil wirkende Spreizkraft zu übertragen, kann der erweiterte Abschnitt des Austrittsschlitzes durch in beiden Seitenwänden des Schlitzes eingearbeitete Nuten gebildet sein, deren Seitenwände einen Führungskanal für den Ringkörper der Spannmutter beim Einklappen in die Wirkposition und beim Abklappen in die Freigabeposition bilden, wobei die Seitenflächen der Nuten die die Klemmkraft übertragenden Stufenflächen im Durchgang sowie die die Spreizkraft übertragenden Flächenteile bilden.

Nachstehend ist die Erfindung anhand eines in der Zeichnung dargestellten Ausführungsbeispieles im Einzelnen erläutert. Es zeigen:
- Fig. 1: eine annähernd in natürlicher Größe gezeichnete perspektivische Seitenansicht eines Ausführungsbeispiels des erfindungsgemäßen Klemmverbinders in der aktiven Betriebsstellung, bei der er eine Klemmverbindung zwischen Anschweiß-Rohrstutzen bildet, von denen ein Stutzen sichtbar ist;
- Fig. 2: eine Schnittdarstellung von Fig. 1 mit in der Längsrichtung verlaufender Schnittebene, wobei die hergestellte Klemmverbindung der Rohrstutzen gezeigt ist;
- Fig. 3: eine der Fig. 1 ähnliche perspektivische Schrägansicht, wobei das Innere von Spannringteilen ohne Rohrstutzen gezeigt ist, und
- Fig. 4: eine der Fig. 3 entsprechende perspektivische Schrägansicht, wobei jedoch die Bauteile in das Abklappen einer Spannschraube ermöglichender Position dargestellt sind.

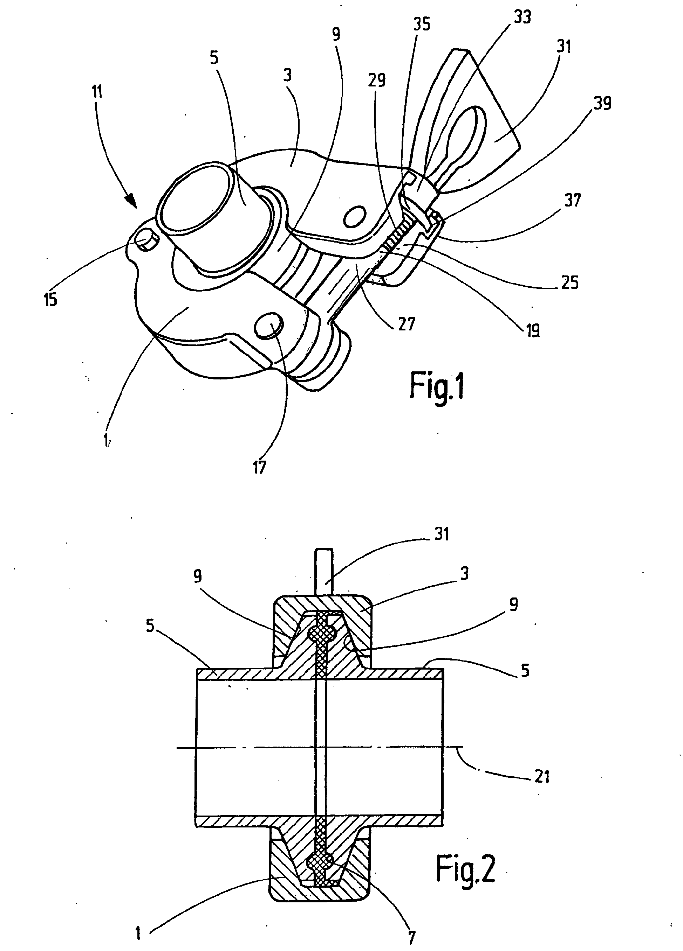

Die Fig. 1 und 2 zeigen das Ausführungsbeispiel im aktiven Funktionszustand, wobei sich ein erstes Spannringteil 1 und ein zweites Spannringteil 3 in einer aneinander angenäherten Spannstellung befinden, in der zwei Anschweiß-Klemmstutzen 5, von denen in Fig. 1 lediglich einer sichtbar ist, miteinander zusammengespannt sind. Wie Fig. 2 zeigt, befindet sich zwischen den Stutzen 5 eine ringscheibenförmige Dichtung 7. Diese besteht aus einem mit dem im Rohrleitungssystem befindlichen Medium verträglichen Kunststoffmaterial, beispielsweise einem Ethylen-Propylen-Dien-Kautschuk (EPDM) oder einem anderen geeigneten Kunststoffwerkstoff. Wie am besten aus Fig. 2 zu ersehen ist, befinden sich an Endflanschen der gleich ausgebildeten Rohrstutzen 5 Schrägflächen 9. In Zusammenwirkung mit entsprechenden Schrägflächen an den Innenseiten der Spannringteile 1 und 3 erzeugen von den Spannringteilen 1 und 3 ausgeübte, radiale Klemmkräfte eine axiale Spannkraft zum gegenseitigen Verspannen der Rohrstutzen 5.

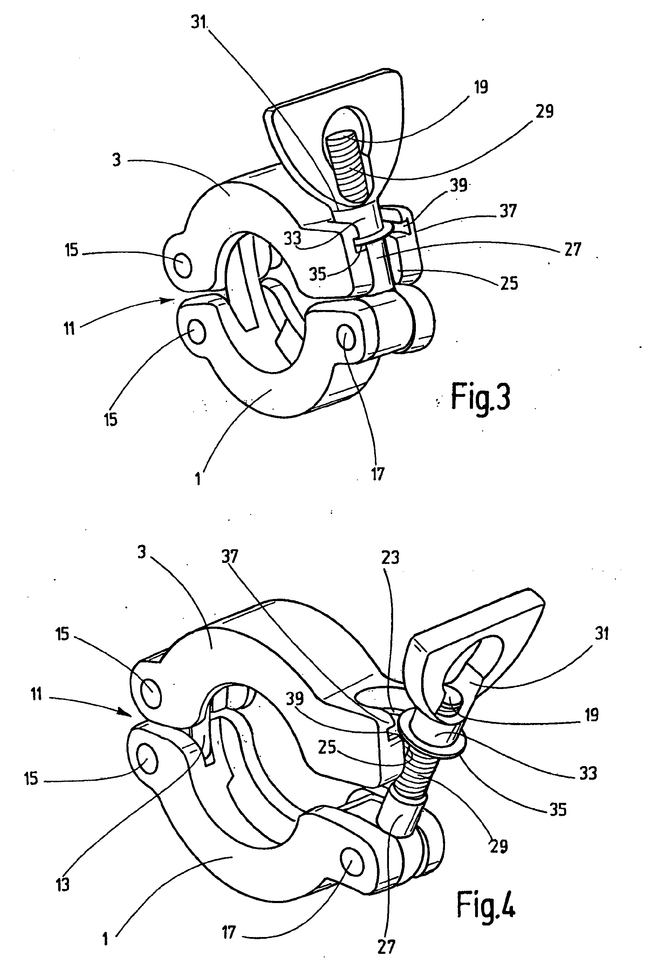

Die Spannringteile 1 und 3, die über eine Gelenkanordnung 11 miteinander verbunden sind, sind in ihrem Verlauf von der Gelenkanordnung 11 bis in die Nähe ihres entgegengesetzten Endes gleich ausgebildet, d. h. sie besitzen in ihrem mittleren Bereich eine einem Teilkreisbogen entsprechende Gestalt. Die Gelenkanordnung 11 weist eine Verbindungslasche 13 (siehe Fig. 4) auf, die, wie die Spannringteile 1 und 3 selbst, aus Edelstahl gefertigt ist und die Form einer flachen, länglichen Platte besitzt. Diese Verbindungslasche 13 ist an ihren beiden Endbereichen über Gelenkzapfen 15 mit den Spannringteilen 1 und 3 gelenkig verbunden.

An dem der Gelenkanordnung 11 entgegengesetzten, vorderen Betätigungsende der Spannringteile 1 und 3 ist die Spanneinrichtung zur Erzeugung der Klemmkraft angeordnet. Wie aus den Figuren ersichtlich, ist am betreffenden Ende des ersten Spannringteiles 1 eine Spannschraube 19 über ein Abklappgelenk 17 derart angelenkt, dass die Spannschraube 19 aus einer Wirkposition, die in Fig. 1 und 3 gezeigt ist, in Freigabepositionen abklappbar ist, nämlich um eine zur Rohrlängsachse 21 (Fig. 2) parallele Schwenkachse, wie es in Fig. 4 verdeutlicht ist.

In der Wirkposition erstreckt sich die Spannschraube 19 durch einen am Betätigungsende des zweiten Spannringteiles 3 ausgebildeten Durchgang 23 (Fig. 4), der am Betätigungsende des Spannringteiles 3 mit einem Austrittsschlitz 25 nach vorn geöffnet ist, so dass die Spannschraube 19 zum Überführen der Spanneinrichtung in die Freigabestellung durch den Austrittsschlitz 25 hindurch nach außen abklappbar oder zum Überführen in die Wirkposition über den Austrittsschlitz 25 in den Durchgang 23 einklappbar ist.

Durch spezielle Gestaltung der Spannschraube 19 und des Austrittsschlitzes 25 ist die Spanneinrichtung mit einer Sperreinrichtung versehen, die ein Abklappen der Spannschraube 19 aus der in Fig. 1 und 3 gezeigten Wirkposition lediglich ermöglicht, wenn sicherheitsrelevante Bedingungen erfüllt sind. Wie aus Fig. 1, 3 und 4 und am deutlichsten aus Fig. 4 erkennbar ist, weist die Spannschraube 19 an dem dem Abklappgelenk 17 benachbarten Endbereich einen Bund 27 auf, dessen Durchmesser größer ist als der Durchmesser des sich an den Bund 27 anschließenden Gewindeabschnittes 29 der Spannschraube 19. Die erwähnte Sperreinrichtung ist dadurch gebildet, dass der Durchmesser des Bundes 27 größer ist als die Weite des Austrittsschlitzes 25, während der Außendurchmesser des Gewindeabschnittes 29 wiederum geringer ist als die Weite des Austrittsschlitzes 25. Dadurch ist auf einfache und sichere Weise sichergestellt, dass bei in der Wirkposition befindlicher Spannschraube 19, wenn diese im Durchgang 23 aufgenommen ist, eine Austrittsbewegung der Spannschraube 19 durch den Austrittsschlitz 25 hindurch verhindert ist, weil der Durchmesser des Bundes 27 den Durchtritt durch den Austrittsschlitz 25 verhindert.

Wenn andererseits eine Spannmutter 31, die zur Erzeugung der Klemmkraft mit dem Gewindeabschnitt 29 der Spannschraube 19 in Eingriff ist, zum Lösen der Spanneinrichtung so weit herausgeschraubt ist, wie dies in Fig. 4 angedeutet ist, wobei die Spannringteile 1 und 3 um einen Öffnungswinkel voneinander abgespreitzt sind, bei dem der Bund 27 der Spannschraube 19 den Austrittsschlitz 25 verlassen kann, dann geht die Sperreinrichtung in den Freigabezustand über, da sich nunmehr der im Durchmesser kleinere Gewindeabschnitt 29 durch den Austrittsschlitz 25 bewegen kann. Mit anderen Worten gesagt, ist daher ein Einklappen der Spannschraube 19 in den Durchgang 23 und ein Abklappen für die Freigabe der Spannringteile 1 und 3 nur in Abhängigkeit von einem vorgegebenen Öffnungswinkel der Spannringteile 1 und 3 möglich. Wie aus den Figuren ebenfalls ersichtlich ist, sind der Durchgang 23 und der Austrittsschlitz 25 in besonderer Weise gestuft. In Zusammenwirkung mit der speziellen Bauweise der Spannmutter 31 weist die Spanneinrichtung nicht nur die ein unerwünschtes Abklappen verhindernde Sperreinrichtung auf, sondern es ist auch eine Einrichtung gebildet, die beim Herausschrauben der Spannmutter 31 ein zwangsweises Öffnen der Spannringteile 1 und 3 bewirkt. Zu diesem Zweck weist die Spannmutter 31 am Ende eines runden Schaftteiles 33 einen flanschartigen, radial vorspringenden Ringkörper 35 auf. Als Führungskanal, durch den hindurch sich der Ringkörper 35 beim Einklappen in den Durchgang 23 und beim Abklappen hindurchbewegt, bildet der Austrittsschlitz 25 am in den Figuren oben liegenden Endbereich einen erweiterten Abschnitt 37. In diesem erweiterten Abschnitt 37 sind in beiden Seitenwänden des Schlitzes 25 Nuten 39 eingearbeitet. Die Seitenwände der Nuten 39 bilden nicht nur einen Führungskanal für den Ringkörper 35 beim Einklappen und Abklappen der Spannschraube 19, sondern bilden auch einander entgegensetzte Stufenflächen. Über die in den Figuren unten liegenden Stufenflächen der Nuten 39 wird beim Festziehen der Spannmutter 31 die Klemmkraft von der entsprechenden Endfläche des Ringkörpers 35 her übertragen. Die dazu entgegengesetzte, obere Endfläche des Ringkörpers 35 überträgt andererseits beim Lösen der Spannmutter 31 über die den Ringkörper 35 übergreifenden Seitenwände der Nuten 39 eine Spreizkraft, durch die beim Lösen der Spannmutter 31 zwangsweise eine Öffnungsbewegung der Spannringteile 1 und 3 erzeugt wird. Damit ist die Gefahr vermieden, dass ein weitgehendes Herausschrauben der Spannmutter 31 ohne eine entsprechende Öffnungsbewegung der Spannringteile 1 und 3 erfolgen kann, wodurch die Gefahr vermieden ist, dass bei einem vollständigen Lösen der Spannmutter 31, in einem Falle wo die Spannringteile 1 und 3 in der Spannstellung gegebenenfalls verkeilt sind und sie der Lösebewegung der Mutter 31 zunächst nicht folgen, es durch Innendruck zu einem schlagartigen Spreizen der Spannringteile 1 und 3 mit einer entsprechenden Gefährdung kommen kann. Demgegenüber ist bei der Erfindung sichergestellt, dass beim Lösen der Spannmutter 31 eine entsprechende, gesteuerte Öffnungsbewegung der Spannringteile 1 und 3 erfolgt.

## Patentansprüche

1. Klemmverbinder zum Zusammenspannen von Verbindungsstutzen (5) an Rohrleitungen,
- mit zwei Spannringteilen (1, 3), die am einen Ende über eine Gelenkanordnung (11) verbunden und um diese zwischen gespreizten Stellungen und einander angenäherten Spannstellungen schwenkbar sind, und
- mit einer am der Gelenkanordnung (11) entgegengesetzten Ende der Spannringteile (1, 3) befindlichen Spanneinrichtung mit einer Spannschraube (19), die aus einer Wirkposition, in der sie zur Erzeugung einer die Spannringteile (1, 3) in die Spannstellungen drängenden Klemmkraft mit diesen zusammenwirkt, und einer davon abgeklappten Freigabeposition schwenkbar ist, bei der die Spannringteile (1, 3) freigegeben sind,
- wobei die Spanneinrichtung eine Sperreinrichtung (25, 27) aufweist, die in ihrem Wirkzustand das Abklappen der Spannschraube (19) in die Freigabeposition verhindert und in Abhängigkeit vom Spreizen der Spannringteile (1, 3) um einen vorgegebenen Öffnungswinkel aus dem Wirkzustand in einen das Abklappen der Spannschraube (19) ermöglichenden Freigabezustand übergeht,
- wobei die mit ihrem einen Ende mit dem ersten Spannringteil (1) über ein Abklappgelenk (17) schwenkbar verbundene Spannschraube (19) einen endseitigen Gewindeabschnitt (29) und einen demgegenüber im Durchmesser vergrößerten, dem Abklappgelenk (17) benachbarten Bund (27) aufweist, und
- wobei das zweite Spannringteil (3) einen Durchgang (23) aufweist, der von der in der Wirkposition befindlichen Spannschraube (19) durchgriffen ist und einen das Abklappen derselben ermöglichenden Austrittsschlitz (25) für die Spannschraube (19) aufweist, dessen Weite zumindest in dem dem ersten Spannringteil (1) benachbarten Schlitzbereich geringer ist als der Durchmesser des Bundes (27) und größer als der Durchmesser des Gewindeabschnittes (29) der Spannschraube (19) ist,
- **dadurch gekennzeichnet, dass** am zweiten Spannringteil (3) Flächenteile vorhanden sind, die zugeordnete Flächenteile einer auf dem Gewindeabschnitt (29) der Spannschraube (19) befindlichen Spannmutter (31) bei der Wirkposition derart übergreifen, dass ein Lösen der Spannmutter (31) ein Spreizen der Spannringteile (1, 3) bewirkt.

2. Klemmverbinder nach Anspruch 1, **dadurch gekennzeichnet, dass** die Spannmutter (31) einen bei der Wirkposition der Spannschraube (19) im Durchgang (23) des zweiten Spannringteiles (3) aufgenommenen Längenabschnitt (33) aufweist, an dem sich die bei Lösen der Mutter (31) die Spreizkraft erzeugende Fläche sowie die Fläche befinden, über die bei Festziehen der Mutter (31) auf Stufenflächen des Durchganges (23) die Klemmkraft übertragen wird.

3. Klemmverbinder nach Anspruch 2, **dadurch gekennzeichnet, dass** die Mutter (31) in dem im Durchgang (23) aufnehmbaren Bereich einen runden Schaftteil (33) und einen radial von diesem flanschartig vorspringenden Ringkörper (35) besitzt, dessen eine Flanschfläche das Ende des Schaftteiles (33) und die die Klemmkraft übertragende Fläche und dessen andere Fläche die die Spreizkraft übertragende Fläche bilden.

4. Klemmverbinder nach Anspruch 3, **dadurch gekennzeichnet, dass** der Durchgang (23) und dessen Austrittsschlitz (25) im zweiten Spannringteil (3) derart gestuft sind, dass der Ringkörper (35) durch einen erweiterten Abschnitt (37) des Austrittsschlitzes (25) in den Durchgang (23) und aus diesem bewegbar ist, und dass am Ende des erweiterten Abschnittes (37) die sich in den Durchgang (23) erstreckenden Stufenflächen gebildet sind, die die Klemmkraft der anliegenden Flanschfläche des Ringkörpers (35) der Mutter (31) übertragen.

5. Klemmverbinder nach Anspruch 4, **dadurch gekennzeichnet, dass** der erweiterte Abschnitt (37) des Austrittsschlitzes (25) durch in beiden Seitenwänden des Schlitzes (25) eingearbeitete Nuten (39) gebildet ist, deren Seitenwände einen Führungskanal für den Ringkörper (35) der Spannmutter (31) beim Einklappen in die Wirkposition und beim Abklappen in die Freigabeposition bilden, und dass die Seitenflächen der Nuten (39) die die Klemmkraft übertragenden Stufenflächen im Durchgang (23) sowie die die Spreizkraft übertragenden Flächenteile bilden.

## Claims

1. A clamp connector for clamping together connecting pieces (5) on pipelines,
- with two clamping ring parts (1, 3) which are connected on one end by means of a joint arrangement (11) and which can pivot around said joint arrangement between the spread positions and clamped positions in which said clamping ring parts are situated close to one another, and
- with a clamping device that is located on the end of the clamping ring parts (1, 3) opposite the joint arrangement (11), the clamping device having a clamping screw (19) which is pivotable from an active position, in which it works together with said clamping ring parts to generate a clamping force that forces the clamping ring parts (1, 3) into the clamped positions and into a release position which is pivoted out therefrom, in which the clamping ring parts (1, 3) are released,
- the clamping device having a locking device (25, 27) which in its active state prevents the clamping screw (19) from pivoting out into the release position and, as a function of the spreading of the clamping ring parts (1, 3), passes through a pre-determined opening angle from the active state into a release state that makes it possible for the clamping screw (19) to pivot out,
- the clamping screw (19) which is pivotally connected with its one end to the first clamping ring part (1) by means of a pivot-out joint (17) having an end-side threaded section (29) and a collar (27) that is adjacent to the pivot-out joint (17) and that is larger in diameter than the threaded section, and
- the second clamping ring part (3) having a passage (23) through which the clamping screw (19) passes in the active position and an exit slot (25) for the clamping screw (19) which allows the screw to pivot out, the width of this slot, at least in the slot area adjacent to the first clamping ring part (1), being smaller than the diameter of the collar (27) and being larger than the diameter of the threaded section (29) of the clamping screw (19),
- **characterised in that** on the second clamping ring part (3) there are surface area parts that in the active position overlap corresponding surface area parts of a clamping nut (31) located on the threaded section (29) of the clamping screw (19) in such a way that loosening of the clamping nut (31) leads to a spreading of the clamping ring parts (1, 3).

2. The clamp connector according to Claim 1, **characterised in that** the clamping nut (31) has a longitudinal section (33) that is housed in the passage (23) of the second clamping ring part (3) when the clamping screw (19) is in the active position, on which longitudinal section are located the surface that generates the spreading force when the nut (31) is loosened and the surface via which the clamping force is transferred to step surfaces of the passage (23) when the nut (31) is tightened.

3. The clamp connector according to Claim 2, **characterised in that** in the area that can be housed in the passage (23) the nut (31) has a round shank part (33) and a ring body (35) that projects radially therefrom in the shape of a flange, one flange surface of this ring body forming the end of the shank part (33) and the surface that transfers the clamping force and its other surface forming the surface that transfers the spreading force.

4. The clamp connector according to Claim 3, **characterised in that** the passage (23) and its exit slot (25) in the second clamping ring part (3) are stepped in such a way that the ring body (35) can be moved through an enlarged section (37) of the exit slot (25) into and out of the passage (23) and that at the end of the enlarged section (37) the step surfaces that extend into the passage (23) are formed that transfer the clamping force of the adjacent flange surface of the ring body (35) of the nut (31).

5. The clamp connector according to Claim 4, **characterised in that** the enlarged section (37) of the exit slot (25) is formed by grooves (39) made in the two side walls of the slot (25), the side walls of the grooves forming a guide channel for the annular body (35) of the clamping nut (31) when pivoting into the active position and pivoting out into the release position, and that the side surfaces of the grooves (39) form the step surfaces in the passage (23) that transfer the clamping force, as well as the surface area parts that transfer the spreading force.

## Revendications

1. Dispositif de serrage pour serrer des tubulures (5) de raccordement à des conduits,
- comprenant deux parties (1, 3) formant collier de serrage, qui sont reliées à une extrémité par un agencement (11) d'articulation et qui peuvent pivoter autour de celui-ci entre des positions écartées et des positions de serrage rapprochées l'une de l'autre, et
- comprenant un dispositif de blocage se trouvant à l'extrémité, opposée à l'agencement (11) d'articulation, des parties (1, 3) formant collier de serrage et ayant une vis (19) de blocage, qui peut basculer d'une position active, dans laquelle, pour la production d'une force de serrage repoussant les parties (1, 3) formant collier de serrage dans les positions de serrage, elle coopère avec celles-ci, et d'une position de libération, qui en est éloignée et dans laquelle les parties (1, 3) formant collier de serrage sont libérées,
- dans lequel le dispositif de blocage comporte un dispositif (25, 27) d'arrêt, qui, dans son état actif, empêche la vis (19) de blocage de venir dans la position de libération et qui, en fonction de l'écartement des parties (1, 3) formant collier de serrage, passe d'un angle d'ouverture prescrit de l'état actif à un état de libération permettant le basculement de la vis (19) de blocage,
- dans lequel la vis (19) de blocage, reliée par l'une de ses extrémités à basculement avec la première partie (1) formant collier de serrage par une articulation (17) de basculement, a un tronçon (29) fileté du côté de l'extrémité et un collet (27) voisin de l'articulation (17) de basculement et de diamètre plus grand que le tronçon (29) fileté, et
- dans lequel la deuxième partie (3) formant collier de serrage a un passage (23), dans lequel passe la vis (19) de blocage se trouvant dans la position active, et une fente (25) de sortie de la vis (19) de blocage lui permettant le basculement, fente dont la largeur est, au moins dans la région de la fente voisine de la première partie (1) formant collier de serrage, plus grande que le diamètre du collet (27) et plus grande que le diamètre du tronçon (29) fileté de la vis (19) de serrage,
- **caractérisé en ce qu'**il y a, sur la deuxième partie (3) formant collier de serrage, des parties de surface, qui, en la position active, empiètent sur les parties de surface associées d'un écrou (31) de blocage se trouvant sur le tronçon (29) fileté de la vis (19) de blocage, de manière à ce qu'un desserrage de l'écrou (31) de blocage provoque un écartement des parties (1, 3) formant collier de serrage.

2. Dispositif de serrage suivant la revendication 1, **caractérisé en ce que** l'écrou (31) de blocage a un tronçon (33) longitudinal, qui est reçu, dans la position active de la vis (19) de blocage, dans le passage (23) de la deuxième partie (3) formant collier de serrage et sur lequel se trouvent les surfaces produisant, lors du desserrage de l'écrou (31), la force d'écartement ainsi que les surfaces par lesquelles, lorsque l'écrou (31) est serré, la force de serrage est transmise à des surfaces en palier du passage (23).

3. Dispositif de serrage suivant la revendication 2, **caractérisé en ce que** l'écrou (31) a, dans la région pouvant être reçue dans le passage (23), une partie (33) de fût circulaire et un corps (35) annulaire en saillie radialement de celui-ci à la manière d'une bride, corps dont une surface de bride forme l'extrémité de la partie (33) de fût et la surface transmettant la force de serrage et dont l'autre surface forme la surface transmettant la force d'écartement.

4. Dispositif de serrage suivant la revendication 3, **caractérisé en ce que** le passage (23) et sa fente (25) de sortie sont étagés dans la deuxième partie (3) de collier formant serrage, de manière à ce que le corps (35) annulaire puisse passer dans une partie (37) élargie de la fente (25) de sortie dans le passage (23) et hors de celui-ci, et **en ce que**, à l'extrémité du tronçon (37) élargi, sont formées des surfaces en palier s'étendant dans le passage (23) et transmettant la force de serrage à la surface de bride appliquée du corps (35) annulaire de l'écrou (31).

5. Dispositif de serrage suivant la revendication 4, **caractérisé en ce que** le tronçon (37) élargi de la fente (25) de sortie est formé par des rainures (39) usinées dans deux parois latérales de la fente (25), rainures dont les parois latérales forment un canal de guidage pour le corps (35) annulaire de l'écrou (31) de blocage, lors de l'entrée par basculement dans la position active et lors de la sortie par basculement dans la position de libération, et **en ce que** les parois latérales des rainures (39) forment les surfaces de palier transmettant la force de serrage dans le passage (23), ainsi que les parties de surface transmettant la force d'écartement.
